# EUROPEAN PATENT SPECIFICATION

(11) **EP 4 220 819 B1**
(45) Date of publication and mention of the grant of the patent: **29.07.2026**
(21) Application number: 22176391.5
(22) Date of filing: 31.05.2022
(51) Int. Cl.: H01M 10/44, H02J 7/00, G06F 1/20, G06F 1/32

(54) **METHOD AND APPARATUS OF TEMPERATURE CONTROL, AND STORAGE MEDIUM**
VERFAHREN UND VORRICHTUNG ZUR TEMPERATURREGELUNG UND SPEICHERMEDIUM
PROCÉDÉ ET APPAREIL DE RÉGULATION DE TEMPÉRATURE ET SUPPORT D'ENREGISTREMENT

(30) Priority: 29.01.2022 CN 202210112866
(43) Date of publication of application: 02.08.2023
(73) Proprietor: Beijing Xiaomi Mobile Software Co., Ltd., Beijing 100085 (CN)
(72) Inventor: LI, Xingyu, Beijing, 100085 (CN)
(74) Representative: Stöckeler, Ferdinand

(56) References cited:
- CN-A- 113 029 387
- CN-A- 113 889 680
- US-A1- 2011 301 778
- US-A1- 2014 195 066
- US-A1- 2016 062 326
- US-A1- 2018 181 171
- US-B1- 10 884 475

## Description

### FIELD

The present invention relates to a field of charging technologies, and more particularly, to a method of temperature control, an apparatus of temperature control, and a storage medium.

### BACKGROUND

With increasing popularity of smart phones and other terminal devices, requirements for richness of use scenarios of products are also gradually improved. A user often uses a terminal device during a charging process of the terminal device, to meet requirements of entertainment or work. In related art, a method for controlling a charging temperature usually is controlling a central processing unit (CPU) to reduce an operating frequency and a charging current based on an overall fitting temperature. The whole terminal device has only one fitting temperature, which summarizes and blends heating situations of elements at various positions of the terminal device. When it is detected that the fitting temperature is too high, since both the CPU and a charging chip are on a motherboard, the operating frequency of the CPU and the charging current will be reduced simultaneously, which may cause inaccurately control the heating situations, reduce accuracy and effectiveness of temperature control, and also affect user experiences.

US 2014/195066 A1 discloses a method and a system, which detect temperatures of multiple zones of a computer system using sensors distributed across the computer system. For each of the sensors, the system may determine whether a detected temperature associated with the sensor exceeds a predetermined value. If the detected temperature exceeds the predetermined value, the system may cool at least one of a plurality of devices of the system, based on a proximity of the at least one of the plurality of devices to the sensor.

### SUMMARY

In view of this, the present invention provides a method of temperature control, an apparatus of temperature control, an electronic device and a storage medium, to at least solve the problem that an operating efficiency of a CPU and a charging chip cannot be controlled respectively in the related arts.

A first aspect of the present invention provides a method of temperature control. The method includes:
obtaining first temperature information of a first circuit board in the terminal device, in which the first circuit board is provided with a central processing unit CPU;
obtaining second temperature information of a second circuit board in the terminal device, in which the second circuit board is provided with a charging chip;
independently controlling an operating frequency of the CPU according to the first temperature information to enable a temperature of the CPU to be within a first temperature range, and independently controlling a charging current of the charging chip according to the second temperature information to enable a temperature of the charging chip to be within a second temperature range.

Alternatively, obtaining the first temperature information of the first circuit board in the terminal device and obtaining the second temperature information of the second circuit board in the terminal device includes:
acquiring temperatures of one or more acquisition positions of the first circuit board and the second circuit board; and
obtaining the first temperature information of the first circuit board and the second temperature information of the second circuit board by fitting according to the temperatures of the one or more acquisition positions.

Alternatively, acquiring the temperatures of the one or more acquisition positions of the first circuit board and the second circuit board includes:
acquiring the temperatures of the one or more acquisition positions of the first circuit board and the second circuit board by one or more temperature sensors respectively;
in which obtaining the first temperature information of the first circuit board and the second temperature information of the second circuit board by fitting according to the temperatures of the one or more acquisition positions includes:
obtaining weighting coefficients of the temperatures acquired by the one or more temperature sensors respectively according to a distance between the temperature sensor and each circuit board; and
obtaining the first temperature information of the first circuit board and the second temperature information of the second circuit board according to the temperatures acquired by the one or more temperature sensors and the corresponding weighting coefficients.

Alternatively, controlling the operating frequency of the CPU according to the first temperature information to enable the temperature of the CPU to be within the first temperature range includes at least one of:
reducing the operating frequency of the CPU in response to a rate of temperature increase of the first circuit board being greater than a first rate;
reducing the operating frequency of the CPU in response to a temperature of the first circuit board being greater than a first threshold value; or
increasing the operating frequency of the CPU in response to the temperature of the first circuit board being less than a second threshold value.

Alternatively, controlling the charging current of the charging chip according to the second temperature information to enable the temperature of the charging chip to be within the second temperature range includes at least one of:
reducing the charging current of the charging chip in response to a rate of temperature increase of the second circuit board being greater than a second preset rate;
reducing the charging current of the charging chip in response to a temperature of the second circuit board being greater than a third threshold value; or
increasing the charging current of the charging chip in response to the temperature of the second circuit board being less than a fourth threshold value.

Alternatively, the method further includes at least one of:
increasing a frequency of acquiring the temperatures of the one or more acquisition positions in the terminal device in response to a temperature of the first circuit board being greater than a first threshold value or a temperature of the second circuit board being greater than a third threshold value; or
reducing the frequency of acquiring the temperatures of the one or more acquisition positions in the terminal device in response to the temperature of the first circuit board being less than a second threshold value or the temperature of the second circuit board being less than a fourth threshold value.

Alternatively, the first circuit board is a motherboard in the terminal device, and the second circuit board is a micro board in the terminal device.

A second aspect of the present invention provides an apparatus of temperature control. The apparatus includes:
an obtaining module, configured to obtain first temperature information of a first circuit board in a terminal device, in which the first circuit board is provided with a central processing unit CPU; and obtain second temperature information of a second circuit board in the terminal device, in which the second circuit board is provided with a charging chip; and
a temperature control module, configured to independently control an operating frequency of the CPU according to the first temperature information to enable a temperature of the CPU to be within a first temperature range, and independently control a charging current of the charging chip according to the second temperature information to enable a temperature of the charging chip to be within a second temperature range.

Alternatively, the obtaining module is configured to:
acquire temperatures of one or more acquisition positions of the first circuit board and the second circuit board;
obtain the first temperature information of the first circuit board and the second temperature information of the second circuit board by fitting according to the temperatures of the one or more acquisition positions.

Alternatively, the obtaining module is configured to:
acquire the temperatures of the one or more acquisition positions of the first circuit board and the second circuit board by one or more temperature sensors, respectively;
obtain weighting coefficients of the temperatures acquired by the one or more temperature sensors respectively according to a distance between the temperature sensor and each circuit board; and
obtain the first temperature information of the first circuit board and the second temperature information of the second circuit board according to the temperatures acquired by the one or more temperature sensors and the corresponding weighting coefficients.

Alternatively, the temperature control module is configured to perform at least one of:
reducing the operating frequency of the CPU in response to a rate of temperature increase of the first circuit board being greater than a first rate;
reducing the operating frequency of the CPU in response to a temperature of the first circuit board being greater than a first threshold value; or
increasing the operating frequency of the CPU in response to the temperature of the first circuit board being less than a second threshold value.

Alternatively, the temperature control module is configured to perform at least one of:
reducing the charging current of the charging chip in response to a rate of temperature increase of the second circuit board being greater than a second preset rate;
reducing the charging current of the charging chip in response to a temperature of the second circuit board being greater than a third threshold value; or
increasing the charging current of the charging chip in response to the temperature of the second circuit board being less than a fourth threshold value.

Alternatively, the apparatus further includes a frequency control module, configured to perform at least one of:
increasing a frequency of acquiring the temperatures of the one or more acquisition positions in the terminal device in response to a temperature of the first circuit board being greater than a first threshold value or a temperature of the second circuit board being greater than a third threshold value; or,
reducing the frequency of acquiring the temperatures of the one or more acquisition positions in the terminal device in response to the temperature of the first circuit board being less than a second threshold value or the temperature of the second circuit board being less than a fourth threshold value.

Alternatively, the first circuit board is a motherboard in the terminal device, and the second circuit board is a micro board in the terminal device.

A third aspect of the present invention provides a computer-readable storage medium having a computer program stored thereon. When the program is executed by a processor, the method according to the first aspect is implemented.

The technical solution provided by the present invention at least has the following beneficial effects.

The first temperature information and the second temperature information of the circuit boards on which the CPU and the charging chip are respectively provided in the terminal device, the operating frequency of the CPU and the charging current of the charging chip respectively are controlled, such that a heating state of the CPU may not affect the charging current of the charging chip, and a heating state of the charging chip may also not affect the operating frequency of the CPU. The terminal device controls the operating efficiency of the CPU or the charging chip respectively based on the temperature information to enable its temperature to be within the preset range, which may achieve an effect of temperature control and improve user experiences.

It should be understood that the above general description and the following detailed description are only exemplary and explanatory, and do not limit the present invention.

### BRIEF DESCRIPTION OF THE DRAWINGS

The accompanying drawings, which are incorporated in and constitute a portion of this specification, illustrate embodiments consistent with the present invention and, together with the description, serve to explain the principles of the present invention.
FIG. 1 is a flow chart illustrating a method of temperature control according to an embodiment of the present invention.
FIG. 2 is a flow chart illustrating obtaining temperature information according to an embodiment of the present invention.
FIG. 3 is a schematic diagram illustrating an arrangement of NTCs according to an embodiment of the present invention.
FIG. 4 is a block diagram illustrating an apparatus of temperature control according to an embodiment of the present invention.
FIG. 5 is a block diagram illustrating an electronic device according to an embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

Terms used in the present invention are for the purpose of describing specific embodiments only, and are not intended to limit the present invention. The singular forms "a", "said" and "the" used in the present invention and attached claims are also intended to include plural forms, unless the context clearly indicates other meanings. It should also be understood that terms "and/or" as used herein refer to and include any or all possible combinations of one or more associated listed items.

It should be understood that although the terms first, second, third, etc. may be used in the present invention to describe various information, such information should not be limited to these terms. These terms are only used to distinguish the same type of information from each other. For example, without departing from the scope of the present invention, first information may also be referred to as second information, and similarly, the second information may also be referred to as the first information. Depending on the context, the word "if" as used herein can be interpreted as "when" or "upon" or "in response to determining".

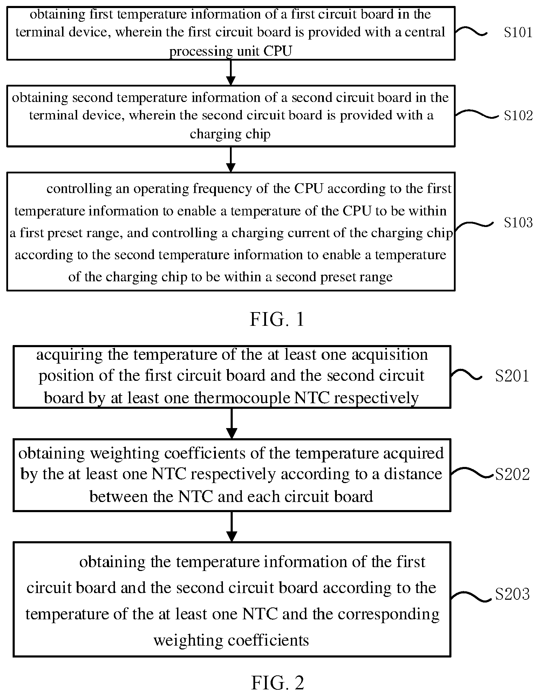

FIG. 1 is a flow chart illustrating a method of temperature control according to an embodiment of the present invention. As illustrated in FIG. 1, the method includes the following blocks.

At block S101, first temperature information of a first circuit board in the terminal device is obtained. The first circuit board is provided with a central processing unit CPU.

The CPU comprises a large number of transistors formed by semiconductor materials such as monocrystalline silicon. In a case of low voltage, the transistor cannot enter an on state due to insufficient voltage at a base or a gate of the transistor. When an input level is high, a pull-down transistor may heat up, and when the input level is low, a pull-up transistor may heat up. In a case of high voltage, a dominant frequency of the CPU will become higher, times of switching on or off will increase, and power lost in each switching on or off will become larger. Insulation strength between the transistors is not enough, resulting in current leakage and heating. In the present invention, obtaining the first temperature information of the first circuit board may detect in real time the amount of heat produced by the CPU due to the above reasons, namely, a heating state of the CPU. The CPU is arranged on the first circuit board of the terminal device. In one example, obtaining the first temperature information may be implemented through any temperature sensor that is provided in the terminal device, such as a thermocouple, a resistance thermometer, a thermistor, etc.

At block S102, second temperature information of a second circuit board in the terminal device is obtained. The second circuit board is provided with a charging chip.

The charging chip is a chip for controlling charging of a battery in the terminal device. When the charging chip operates normally, due to a large amount of current passing through the charging chip for a long time, the charging chip may continuously heat up and the temperature will gradually rise. In the present invention, obtaining the second temperature information of the second circuit board may detect in real time the amount of heat produced due to the above reasons, namely, a heating state of the charging chip. The charging chip is arranged on the second circuit board.

At block S103, an operating frequency of the CPU is controlled according to the first temperature information to enable a temperature of the CPU to be within a first temperature range, and a charging current of the charging chip is controlled according to the second temperature information to enable a temperature of the charging chip to be within a second temperature range.

The operating frequency of the CPU, including the dominant frequency and a clock frequency of the CPU, may determine an operation speed of the CPU. The operating frequency is positively correlated with the heating state of the CPU and the first temperature information, and the heating state of the CPU and the temperature of the CPU may be adjusted by controlling the operating frequency of the CPU, such that the temperature of the CPU may be within the first temperature range capable of maintaining the normal operation of the terminal device. The charging current of the charging chip is a current configured to charge the terminal device. The charging current is positively correlated to the heating state of the charging chip and the second temperature information. The heating state of the charging chip and the temperature of the charging chip may be adjusted by controlling the charging current of the charging chip, such that the temperature of the charging chip may be within the second temperature range capable of maintaining normal charging of the terminal device. In the above control process, the operating efficiency of the CPU and the charging chip may be controlled respectively, or the above elements may be controlled simultaneously to achieve a desired temperature control effect.

According to the method of the present invention, using the first temperature information and the second temperature information of the circuit boards on which the CPU and the charging chip are respectively provided in the terminal device, the operating frequency of the CPU and the charging current of the charging chip are controlled such that the heating state of the CPU may not affect the charging current of the charging chip, and the heating state of the charging chip may also not affect the operating frequency of the CPU. The terminal device respectively controls the operating efficiency of the CPU or the charging chip based on the temperature information to enable its temperature to be within the preset range, which may achieve an effect of temperature control and improve user experiences.

In a certain embodiment, obtaining the first temperature information of the first circuit board in the terminal device and obtaining the second temperature information of the second circuit board in the terminal device includes: acquiring temperature of at least one acquisition position of the first circuit board and the second circuit board; obtaining the first temperature information of the first circuit board and the second temperature information of the second circuit board by fitting according to the temperature of the at least one acquisition position.

The temperature of the at least one acquisition position in the terminal device may be acquired by the temperature sensor. In an example, the temperature sensor may be provided at a position close to a housing of the terminal device, and the temperature is a temperature of the housing of the terminal device. For example, in the terminal device such as a mobile phone, elements such as the CPU or the charging chip is close to the housing side of the device, so the temperature of the housing is positively correlated with the temperature of the foregoing elements, and a trend of temperature change of the CPU or the charging chip may be obtained through the change of the temperature of the housing. When there are a plurality of temperature sensors, the temperatures acquired by the plurality of sensors may be fitted to a unique temperature that may reflect the temperature information of the first circuit board and the second circuit board.

According to the method of the present invention, the temperature of the at least one acquisition position of target circuit boards where the CPU and the charging chip are located in the terminal device, and the first temperature information and the second temperature information of the circuit boards respectively are obtained by fitting. The operating frequency of the CPU and the charging current of the charging chip are controlled such that the heating state of the CPU may not affect the charging current of the charging chip, and the heating state of the charging chip may also not affect the operating frequency of the CPU. The terminal device respectively controls the operation of the CPU or the charging chip based on the temperature information to enable its temperature to be within the preset range, which may achieve an effect of temperature control and improve user experiences.

FIG. 2 is a flow chart illustrating obtaining temperature information according to an embodiment of the present invention.

At block S201, acquiring the temperature of the at least one acquisition position of the first circuit board and the second circuit board includes: acquiring the temperature of the at least one acquisition position of the first circuit board and the second circuit board by at least one thermocouple NTC, respectively, i.e., a thermocouple having a negative temperature coefficient, NTC, which is referred to as NTC herein.

The NTC, as a sensor for acquiring temperature information in the terminal device, has advantages of a small size, a high sensitivity, insensitivity to polarity, and low cost. In a case where the terminal device has one NTC, the temperature at the acquisition position of the first circuit board and the second circuit board is acquired via the NTC, and the temperature at the acquisition position is determined as the temperature information of the circuit boards. In a case where the terminal device has a plurality of NTCs, the temperatures at the plurality of acquisition positions may be acquired respectively to obtain the temperature information of the circuit boards. In an example, some NTCs may be provided on the first circuit board and the second circuit board respectively for acquiring the first temperature information and the second temperature information.

At block S202, obtaining the first temperature information of the first circuit board and the second temperature information of the second circuit board by fitting according to the temperature of the at least one acquisition position includes: obtaining weighting coefficients of the temperature acquired by the at least one NTC respectively according to a distance between the NTC and each circuit board.

Due to different NTCs having different distances between the CPU and the charging chip, as well as a heat dissipation structure of the terminal device itself, the temperatures acquired by the NTCs for detecting the CPU or the charging chip are different. Therefore, the weighting coefficients of the temperature acquired by each NTC may be acquired according to the distances of each NTC relative to the CPU and the charging chip, so as to reduce an error of the temperature acquired by different NTCs on the circuit board where a same CPU and a same charging chip are located due to reasons such as the distance.

At block S203, the first temperature information of the first circuit board and the second temperature information of the second circuit board are obtained according to the temperature of the at least one NTC and the corresponding weighting coefficients.

The temperature may be fitted based on the weighting coefficients and the temperature of the acquisition position acquired by the NTC, and the temperatures detected by the plurality of NTCs that perform temperature detection at the positions where the CPU and the charging chip are located are fitted as the unique temperature information of the CPU and the charging chip and the temperature information of the first circuit board and the second circuit board.

According to the method of the present invention, using the first temperature information and the second temperature information of the circuit boards on which the CPU and the charging chip are respectively provided in the terminal device, the operating frequency of the CPU and the charging current of the charging chip are controlled such that the heating state of the CPU may not affect the charging current of the charging chip, and the heating state of the charging chip may also not affect the operating frequency of the CPU. The terminal device respectively controls the operation of the CPU or the charging chip based on the temperature information to enable its temperature to be within the preset range, which may achieve an effect of temperature control and improve user experiences.

In a certain embodiment, controlling the operating frequency of the CPU according to the first temperature information to enable the temperature of the CPU to be within the first temperature range includes at least one of the following.

The operating frequency of the CPU is reduced in response to a rate of temperature increase of the first circuit board being greater than a first rate.

The operating frequency of the CPU is positively correlated with the heating state of the CPU and the first temperature information. In a case that the rate of temperature increase of the first circuit board is greater than the first preset rate within a certain period of time, it indicates that the CPU has a tendency to overheat, so the operating frequency of the CPU is to be reduced to enable the temperature of the CPU to be within the first temperature range.

The operating frequency of the CPU is reduced in response to a temperature of the first circuit board being greater than a first threshold value.

In a case that the temperature of the first circuit board exceeds the first threshold value, it indicates that the CPU has reached an overheating standard, so the operating frequency of the CPU is to be reduced to enable the temperature of the CPU to be kept within the first temperature range.

The operating frequency of the CPU is increased in response to the temperature of the first circuit board being less than a second threshold value.

In a case that the temperature of the first circuit board is less than the second threshold value, it indicates that the temperature of the CPU is low, and the operating frequency of the CPU may be increased to improve operating performance of the terminal device. The second threshold value is less than the first threshold value, and a range formed by the second threshold value and the first threshold value is the first temperature range. The first preset rate, the first threshold and the second threshold may be preset according to experimental data.

According to the method of the present invention, the operating frequency of the CPU is controlled according to the first temperature information, such that the temperature of the CPU is kept within the first temperature range. Therefore, the heating state of the CPU may not affect the operation of the charging chip, the charging chip may not reduce the charging current due to the increase of the temperature of the CPU. In addition, the terminal device may respectively control the operation of the CPU through the temperature information to enable the temperature to be within the preset range, which may achieve the effect of temperature control.

In a certain embodiment, controlling the charging current of the charging chip according to the second temperature information to enable the temperature of the charging chip to be within the second temperature range includes at least one of the following.

The charging current of the charging chip is reduced in response to a rate of temperature increase of the second circuit board being greater than a second preset rate.

The charging current of the charging chip is positively correlated with the heating state of the charging chip and the second temperature information. In a case that the rate of temperature increase of the second circuit board is greater than the second preset rate within a certain period of time, it indicates that the charging chip has a tendency to overheat, so the charging current of the charging chip is to be reduced to enable the temperature of the charging chip to be kept within the second temperature range.

The charging current of the charging chip is reduced in response to a temperature of the second circuit board being greater than a third threshold value.

In a case that the temperature of the second circuit board exceeds the third threshold value, it indicates that the charging chip has reached an overheating standard, so the charging current of the charging chip is to be reduced to enable the temperature of the charging chip to be within the second temperature range.

The charging current of the charging chip is increased in response to the temperature of the second circuit board being less than a fourth threshold value.

In a case that the temperature of the second circuit board is less than the fourth threshold value, it indicates that the temperature of the charging chip is low, and the charging current of the charging chip may be increased to improve the charging efficiency of the terminal device. The fourth threshold value is less that the third threshold value, and a range formed by the fourth threshold value and the third threshold value is the second temperature range. The second preset rate, the third threshold and the fourth threshold may be set according to experimental data.

According to the method of the present invention, the charging current of the charging chip is controlled according to the second temperature information, to enable the temperature of the charging chip to be kept within the second temperature range. Therefore, the heating state of the charging chip may not affect the operation of the CPU, and the CPU may not reduce the operating frequency due to the increase of the temperature of the charging chip. In addition, the terminal device may control the operation of the charging chip based on the temperature information, to enable the temperature to be within the preset range, which may achieve the effect of temperature control.

In a certain embodiment, the method further includes: increasing a frequency of acquiring the temperature of the at least one acquisition position in the terminal device in response to a temperature of the first circuit board being greater than a first threshold value or a temperature of the second circuit board being greater than a third threshold value; and/or reducing the frequency of acquiring the temperature of the at least one acquisition position in the terminal device in response to the temperature of the first circuit board being less than a second threshold value or the temperature of the second circuit board being less than a fourth threshold value.

The temperature of the first circuit board being greater than the first threshold value or the temperature of the second circuit board being greater than the third threshold value, indicates that the CPU or the charging chip is overheated, and increasing the frequency of acquiring the temperature of the at least one acquisition position in the terminal device may increase the number of times of calculation of the fitting temperature, and an update frequency of the temperature information, so as to increase timeliness of the temperature control. The temperature of the first circuit board being less than the second threshold value or the temperature of the second circuit board being less than the fourth threshold value indicates that the temperature of the CPU or the charging chip is low, and that a high frequency for updating the temperature information is not to be maintained. The frequency of acquiring the temperature of the at least one acquisition position in the terminal device may be reduced, the number of times of calculations for the fitting temperature may be reduced and the frequency for updating the temperature information may be reduced, so as to reduce computing pressure of the terminal device.

According to the method of the present invention, the frequency of acquiring the temperature of at least one acquisition position in the terminal device may be adjusted according to the temperature information of the CPU and the charging chip. Thus, the frequency for updating the temperature information is increased when the CPU and the charging chip are overheated, so as to increase the timeliness of the temperature control, and the frequency for updating the temperature information is reduced when the temperature of the CPU and the charging chip is low, so as to reduce the computing pressure of the terminal device.

In a certain embodiment, the first circuit board may be a motherboard in the terminal device, and the second circuit board may be a micro board in the terminal device.

The CPU may be arranged on the motherboard of the terminal device, and compared with other circuit boards, the motherboard has better heat dissipation and expandability, which is beneficial to connection and the heat dissipation of the CPU and other key components. In addition, the charging chip may be arranged on the micro board of the terminal device, the cost of the micro board is lower, the space occupation is smaller, which is more suitable to be arranged on a battery side of the terminal devices such as the mobile phone.

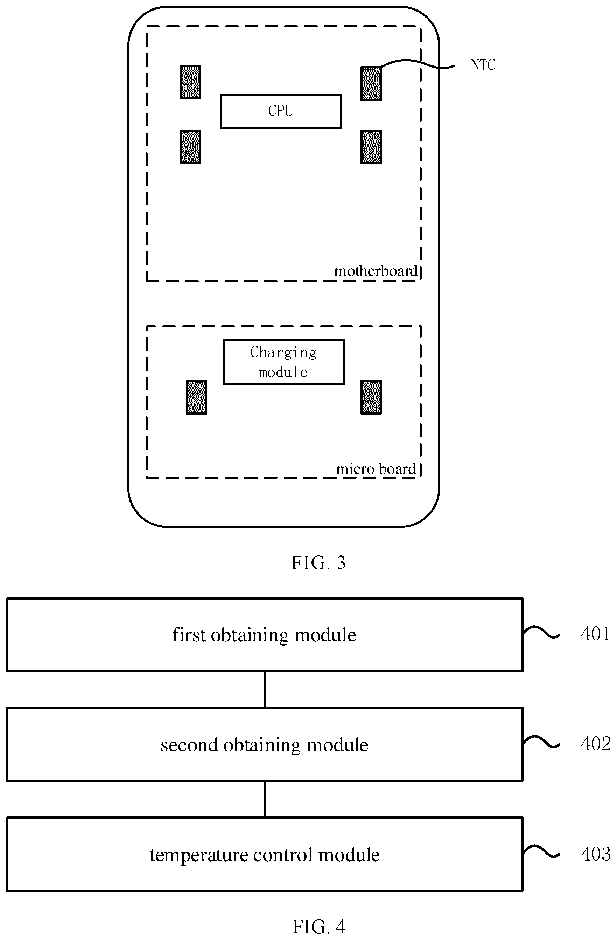

FIG. 3 is a schematic diagram illustrating an arrangement of NTCs according to an embodiment of the present invention.

In an example, the NTCs may be classified into a motherboard NTC and a micro board NTC, which are respectively arranged on the motherboard and the micro board of the terminal device. The motherboard NTC is configured to acquire the temperature of the housing at the position where the motherboard is located to detect the temperature of the CPU. The micro board NTC is configured to acquire the temperature of the housing at the position where the micro board is located to detect the temperature at the position where the charging chip is located.

In an example, the charging chip may be formed by a plurality of chips. In a case of two charging chips, two NTCs may be arranged side by side on the micro board to detect the temperatures of the two charging chips respectively.

According to the method described in the present invention, with obtaining the first temperature information and the second temperature information of the motherboard and the micro board respectively provided with the CPU and the charging chip in the terminal device, the operating frequency of the CPU and the charging current of the charging chip may be controlled, such that the heating state of the CPU may not affect the charging current of the charging chip, and the heating state of the charging chip may not affect the operating frequency of the CPU. The terminal device respectively controls the operation of the CPU or the charging chip based on the temperature information to enable its temperature to be within the preset range, which may achieve an effect of temperature control and improve user experiences.

For sake of simplicity, the above method embodiments are expressed as a combination of a series of actions. However, those skilled in the art should know that the present invention is not limited by the sequence of the described actions, because some steps may be implemented in other sequences or simultaneously according to the present invention.

Those skilled in the art should also know that the embodiments described in the specification are alternative embodiments, and the actions and modules involved may be not necessary for the present invention.

Corresponding to the above method embodiments for realizing an application function, the present invention also provides apparatus embodiments for realizing the application function and the corresponding terminal device.

FIG. 4 is a block diagram illustrating an apparatus of temperature control according to an embodiment of the present invention. As illustrated in FIG. 4, the apparatus includes an obtaining module and a temperature control module 403. The obtaining module further includes a first obtaining module 401 and a second obtaining module 402.

The first obtaining module 401 is configured to obtain first temperature information of a first circuit board in the terminal device, in which the first circuit board is provided with a central processing unit CPU;
The second obtaining module 402 is configured to obtain second temperature information of a second circuit board in the terminal device, in which the second circuit board is provided with a charging chip;
The temperature control module 403 is configured to control an operating frequency of the CPU according to the first temperature information to enable a temperature of the CPU to be within a first temperature range, and control a charging current of the charging chip according to the second temperature information to enable a temperature of the charging chip to be within a second temperature range.

In combination with any implementation of the present invention, the obtaining module is configured to obtain temperature information of the CPU and the charging chip, and configured to:
acquire temperature of at least one acquisition position of the first circuit board and the second circuit board;
obtain the first temperature information of the first circuit board and the second temperature information of the second circuit board by fitting according to the temperature of the at least one acquisition position.

In combination with any implementation of the present invention, acquiring the temperature of the at least one acquisition position of the first circuit board and the second circuit board includes:
acquiring the temperature of the at least one acquisition position of the first circuit board and the second circuit board by at least one thermocouple NTC respectively;
in which obtaining the first temperature information of the first circuit board and the second temperature information of the second circuit board by fitting according to the temperature of the at least one acquisition position includes:
obtaining weighting coefficients of the temperature acquired by the at least one NTC respectively according to a distance between the NTC and each circuit board;
obtaining the first temperature information of the first circuit board and the second temperature information of the second circuit board according to the temperature of the at least one NTC and the corresponding weighting coefficients.

In combination with any implementation of the present invention, controlling, by the temperature control module, the operating frequency of the CPU according to the first temperature information to enable the temperature of the CPU to be within the first temperature range includes at least one of:
reducing the operating frequency of the CPU in response to a rate of temperature increase of the first circuit board being greater than a first rate;
reducing the operating frequency of the CPU in response to a temperature of the first circuit board being greater than a first threshold value; or
increasing the operating frequency of the CPU in response to the temperature of the first circuit board being less than a second threshold value.

In combination with any implementation of the present invention, controlling, by the temperature control module, the charging current of the charging chip according to the second temperature information to enable the temperature of the charging chip to be within the second temperature range includes at least one of:
reducing the charging current of the charging chip in response to a rate of temperature increase of the second circuit board being greater than a second preset rate;
reducing the charging current of the charging chip in response to a temperature of the second circuit board being greater than a third threshold value; or
increasing the charging current of the charging chip in response to the temperature of the second circuit board being less than a fourth threshold value.

In combination with any implementation of the present invention, the apparatus further includes a frequency control module, configured to:
increase a frequency of acquiring the temperature of the at least one acquisition position in the terminal device in response to a temperature of the first circuit board being greater than a first threshold value or a temperature of the second circuit board being greater than a third threshold value; and/or,
reduce the frequency of acquiring the temperature of the at least one acquisition position in the terminal device in response to the temperature of the first circuit board being less than a second threshold value or the temperature of the second circuit board being less than a fourth threshold value.

In combination with any implementation of the present invention, the first circuit board is a motherboard in the terminal device, and the second circuit board is a micro board in the terminal device.

The apparatus embodiments generally correspond to the method embodiments, and with respect to the description of relevant parts thereof, reference can be made to the description of the method embodiments. The apparatus embodiments described above are merely illustrative, where the units described as separate components may or may not be physically separated, and the components displayed as units may or may not be physical units, that is, the units may be located in one place, or distributed to a plurality of network units. Some or all of the modules are selected according to actual needs to achieve the objectives of the solution of the present invention. Those of ordinary skill in the art may understand and implement the technical solution without inventive works.

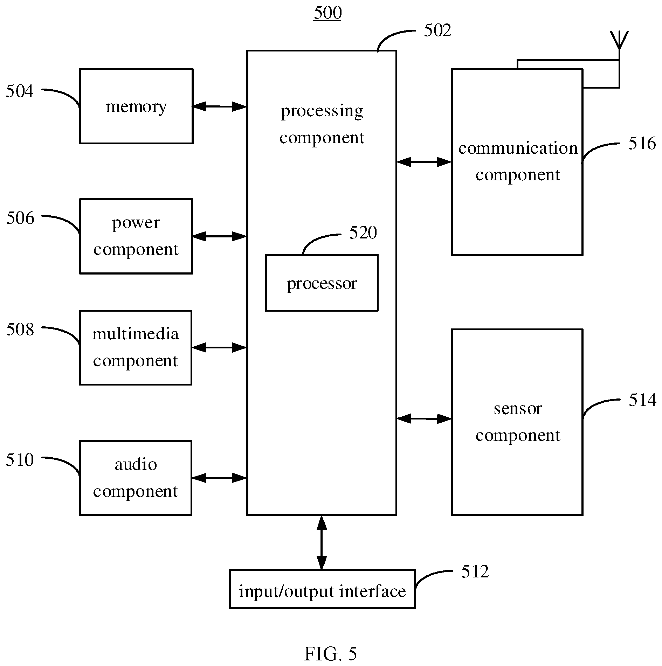

FIG. 5 is a block diagram illustrating a terminal according to an embodiment of the present invention.

With reference to FIG. 5, which illustrates a block diagram of an electronic device, for example, the apparatus 500 may be a mobile phone, a computer, a digital broadcasting terminal, a messaging device, a game console, a tablet device, a medical device, a fitness device, and a personal digital assistant.

As illustrated in FIG. 5, the apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power management system, one or more power sources, and any other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. When the apparatus 500 is in an operation mode, such as a shooting mode or a video mode, the front camera and/or the rear camera may receive external multimedia data. Each front camera and rear camera can be a fixed optical lens system or have focal length and optical zoom capabilities.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus 500, a relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may further include an acceleration sensor, a gyro sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as Wi-Fi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an embodiment, a storage medium including instructions is provided, such as the memory 504 including instructions, and the foregoing instructions may be executed by the processor 520 of the apparatus 500 to complete the foregoing method. Optionally, the storage medium may be a non-transitory computer-readable storage medium, for example, the non-transitory computer-readable storage medium may be a ROM, a random access memory (RAM), a CD-ROM, a magnetic tape, a floppy disk, and an optical data storage device.

Those skilled in the art easily think of other embodiments of the present invention after considering the description and practicing the invention disclosed herein. This invention is intended to cover any variations, uses, or adaptive changes that follow the general principles of this invention and include common general knowledge or customary technical means in the technical field not disclosed in this invention. The description and examples are to be considered exemplary only, and the true scope of this invention is defined by the claims.

It should be understood that the present invention is not limited to the precise structure that has been described above and shown in the drawings, and various modifications and changes can be made without departing from the scope thereof. The scope of the present invention is limited only by the appended claims.

## Claims

1. A method of temperature control, comprising:
obtaining (S101) first temperature information of a first circuit board in a terminal device, wherein the first circuit board is provided with a central processing unit, CPU;
**characterized by**, further comprising:
obtaining (S102) second temperature information of a second circuit board in the terminal device, wherein the second circuit board is provided with a charging chip; and
independently controlling (S103) an operating frequency of the CPU according to the first temperature information to enable a temperature of the CPU to be within a first temperature range, and independently controlling a charging current of the charging chip according to the second temperature information to enable a temperature of the charging chip to be within a second temperature range.

2. The method according to claim 1, wherein obtaining (S101) the first temperature information of the first circuit board in the terminal device and obtaining (S102) the second temperature information of the second circuit board in the terminal device comprises:
acquiring temperatures of one or more acquisition positions of the first circuit board and the second circuit board; and
obtaining the first temperature information of the first circuit board and the second temperature information of the second circuit board by fitting according to the temperatures of the one or more acquisition positions.

3. The method according to claim 2, wherein acquiring the temperatures of the one or more acquisition positions of the first circuit board and the second circuit board comprises:
acquiring (S201) the temperatures of the one or more acquisition positions of the first circuit board and the second circuit board by one or more temperature sensors respectively;
wherein obtaining the first temperature information of the first circuit board and the second temperature information of the second circuit board by fitting according to the temperatures of the one or more acquisition positions comprises:
obtaining (S202) weighting coefficients of the temperatures acquired by the one or more temperature sensors respectively according to a distance between the temperature sensor and each circuit board; and
obtaining (S203) the first temperature information of the first circuit board and the second temperature information of the second circuit board according to the temperatures acquired by the one or more temperature sensors and the corresponding weighting coefficients.

4. The method according to any one of claims 1 to 3, wherein controlling (S103) the operating frequency of the CPU according to the first temperature information to enable the temperature of the CPU to be within the first temperature range comprises at least one of:
reducing the operating frequency of the CPU in response to a rate of temperature increase of the first circuit board being greater than a first rate;
reducing the operating frequency of the CPU in response to a temperature of the first circuit board being greater than a first threshold value; or
increasing the operating frequency of the CPU in response to the temperature of the first circuit board being less than a second threshold value.

5. The method according to any one of claims 1 to 4, wherein controlling (S103) the charging current of the charging chip according to the second temperature information to enable the temperature of the charging chip to be within the second temperature range comprises at least one of:
reducing the charging current of the charging chip in response to a rate of temperature increase of the second circuit board being greater than a second preset rate;
reducing the charging current of the charging chip in response to a temperature of the second circuit board being greater than a third threshold value; or
increasing the charging current of the charging chip in response to the temperature of the second circuit board being less than a fourth threshold value.

6. The method according to claim 2, further comprising at least one of:
increasing a frequency of acquiring the temperatures of the one or more acquisition positions in the terminal device in response to a temperature of the first circuit board being greater than a first threshold value or a temperature of the second circuit board being greater than a third threshold value; or
reducing the frequency of acquiring the temperatures of the one or more acquisition positions in the terminal device in response to the temperature of the first circuit board being less than a second threshold value or the temperature of the second circuit board being less than a fourth threshold value.

7. The method according to any one of claims 1 to 6, wherein the first circuit board is a motherboard in the terminal device, and the second circuit board is a micro board in the terminal device.

8. An apparatus of temperature control, comprising:
an obtaining module (401, 402), configured to obtain first temperature information of a first circuit board in a terminal device, wherein the first circuit board is provided with a central processing unit CPU,
**characterized in that**,
the obtaining module (401, 402) is further configured to obtain second temperature information of a second circuit board in the terminal device, wherein the second circuit board is provided with a charging chip; and
the apparatus further comprises a temperature control module (403), configured to independently control an operating frequency of the CPU according to the first temperature information to enable a temperature of the CPU to be within a first temperature range, and independently control a charging current of the charging chip according to the second temperature information to enable a temperature of the charging chip to be within a second temperature range.

9. The apparatus according to claim 8, wherein the obtaining module (401, 402) is configured to:
acquire temperatures of one or more acquisition positions of the first circuit board and the second circuit board;
obtain the first temperature information of the first circuit board and the second temperature information of the second circuit board by fitting according to the temperatures of the one or more acquisition positions.

10. The apparatus according to claim 9, wherein the obtaining module (401, 402) is configured to:
acquire the temperatures of the one or more acquisition positions of the first circuit board and the second circuit board by one or more temperature sensors, respectively;
obtain weighting coefficients of the temperatures acquired by the one or more temperature sensors respectively according to a distance between the temperature sensor and each circuit board; and
obtain the first temperature information of the first circuit board and the second temperature information of the second circuit board according to the temperatures acquired by the one or more temperature sensors and the corresponding weighting coefficients.

11. The apparatus according to any one of claims 8 to 10, wherein the temperature control module (403) is configured to perform at least one of:
reducing the operating frequency of the CPU in response to a rate of temperature increase of the first circuit board being greater than a first rate;
reducing the operating frequency of the CPU in response to a temperature of the first circuit board being greater than a first threshold value; or
increasing the operating frequency of the CPU in response to the temperature of the first circuit board being less than a second threshold value.

12. The apparatus according to any one of claims 8 to 11, wherein the temperature control module (403) is configured to perform at least one of:
reducing the charging current of the charging chip in response to a rate of temperature increase of the second circuit board being greater than a second preset rate;
reducing the charging current of the charging chip in response to a temperature of the second circuit board being greater than a third threshold value; or
increasing the charging current of the charging chip in response to the temperature of the second circuit board being less than a fourth threshold value.

13. The apparatus according to claim 9, further comprising a frequency control module, configured to:
increase a frequency of acquiring the temperatures of the one or more acquisition positions in the terminal device in response to a temperature of the first circuit board being greater than a first threshold value or a temperature of the second circuit board being greater than a third threshold value; or
reduce the frequency of acquiring the temperatures of the one or more acquisition positions in the terminal device in response to the temperature of the first circuit board being less than a second threshold value or the temperature of the second circuit board being less than a fourth threshold value.

14. The apparatus according to any one of claims 8 to 13, wherein the first circuit board is a motherboard in the terminal device, and the second circuit board is a micro board in the terminal device.

15. A computer-readable storage medium having a computer program stored thereon, wherein when the program is executed by a processor, the method according to any one of claims 1-7 is implemented.

## Patentansprüche

1. Ein Verfahren zur Temperatursteuerung, das folgende Schritte aufweist:
Erhalten (S101) erster Temperaturinformationen einer ersten Schaltungsplatine in einem Endgerät, wobei die erste Leiterplatte mit einer zentralen Verarbeitungseinheit, CPU, versehen ist;
**dadurch gekennzeichnet, dass** dasselbe ferner folgende Schritte aufweist:
Erhalten (S102) zweiter Temperaturinformationen einer zweiten Schaltungsplatine in dem Endgerät, wobei die zweite Schaltungsplatine mit einem Ladechip versehen ist; und
unabhängiges Steuern (S103) einer Betriebsfrequenz der CPU gemäß den ersten Temperaturinformationen, um zu ermöglichen, dass eine Temperatur der CPU innerhalb eines ersten Temperaturbereichs liegt, und unabhängiges Steuern eines Ladestroms des Ladechips gemäß den zweiten Temperaturinformationen, um zu ermöglichen, dass eine Temperatur des Ladechips innerhalb eines zweiten Temperaturbereichs liegt.

2. Das Verfahren gemäß Anspruch 1, wobei das Erhalten (S101) der ersten Temperaturinformationen der ersten Schaltungsplatine in dem Endgerät und das Erhalten (S102) der zweiten Temperaturinformationen der zweiten Schaltungsplatine in dem Endgerät folgende Schritte aufweist:
Erfassen von Temperaturen einer oder mehrerer Erfassungspositionen der ersten Schaltungsplatine und der zweiten Schaltungsplatine; und
Erhalten der ersten Temperaturinformationen der ersten Schaltungsplatine und der zweiten Temperaturinformationen der zweiten Schaltungsplatine durch Anpassen gemäß den Temperaturen der einen oder mehreren Erfassungspositionen.

3. Das Verfahren gemäß Anspruch 2, wobei das Erfassen der Temperaturen der einen oder mehreren Erfassungspositionen der ersten Schaltungsplatine und der zweiten Schaltungsplatine folgende Schritte aufweist:
Erfassen (S201) der Temperaturen der einen oder mehreren Erfassungspositionen der ersten Schaltungsplatine und der zweiten Schaltungsplatine durch einen beziehungsweise mehrere Temperatursensoren;
wobei das Erhalten der ersten Temperaturinformationen der ersten Schaltungsplatine und der zweiten Temperaturinformationen der zweiten Schaltungsplatine durch Anpassen gemäß den Temperaturen der einen oder mehreren Erfassungspositionen folgende Schritte aufweist:
Erhalten (S202) von Gewichtungskoeffizienten der Temperaturen, die durch den einen beziehungsweise die mehreren Temperatursensoren gemäß einem Abstand zwischen dem Temperatursensor und jeder Schaltungsplatine erfasst werden ; und
Erhalten (S203) der ersten Temperaturinformationen der ersten Schaltungsplatine und der zweiten Temperaturinformationen der zweiten Schaltungsplatine gemäß den Temperaturen, die durch den einen oder die mehreren Temperatursensoren erfasst werden, und der entsprechenden Gewichtungskoeffizienten.

4. Das Verfahren gemäß einem der Ansprüche 1 bis 3, wobei das Steuern (S103) der Betriebsfrequenz der CPU gemäß den ersten Temperaturinformationen, um zu ermöglichen, dass die Temperatur der CPU innerhalb des ersten Temperaturbereichs liegt, zumindest einen der folgenden Schritte aufweist:
Verringern der Betriebsfrequenz der CPU ansprechend darauf, dass eine Temperaturanstiegsrate der ersten Schaltungsplatine größer als eine erste Rate ist;
Verringern der Betriebsfrequenz der CPU ansprechend darauf, dass eine Temperatur der ersten Schaltungsplatine größer als ein erster Schwellenwert ist; oder
Erhöhen der Betriebsfrequenz der CPU ansprechend darauf, dass die Temperatur der ersten Schaltungsplatine geringer als ein zweiter Schwellenwert ist.

5. Das Verfahren gemäß einem der Ansprüche 1 bis 4, wobei das Steuern (S103) des Ladestroms des Ladechips gemäß den zweiten Temperaturinformationen, um zu ermöglichen, dass die Temperatur des Ladechips innerhalb des zweiten Temperaturbereichs liegt, zumindest einen der folgenden Schritte aufweist:
Verringern des Ladestroms des Ladechips ansprechend darauf, dass eine Temperaturanstiegsrate der zweiten Schaltungsplatine größer als eine zweite voreingestellte Rate ist;
Verringern des Ladestroms des Ladechips ansprechend darauf, dass eine Temperatur der zweiten Schaltungsplatine größer als ein dritter Schwellenwert ist; oder
Erhöhen des Ladestroms des Ladechips ansprechend darauf, dass die Temperatur der zweiten Schaltungsplatine geringer als ein vierter Schwellenwert ist.

6. Das Verfahren gemäß Anspruch 2, das ferner zumindest einen der folgenden Schritte aufweist:
Erhöhen einer Frequenz des Erfassens der Temperaturen der einen oder mehreren Erfassungspositionen in dem Endgerät ansprechend darauf, dass eine Temperatur der ersten Schaltungsplatine größer als ein erster Schwellenwert ist oder eine Temperatur der zweiten Schaltungsplatine größer als ein dritter Schwellenwert ist; oder
Verringern der Frequenz des Erfassens der Temperaturen der einen oder mehreren Erfassungspositionen in dem Endgerät ansprechend darauf, dass die Temperatur der ersten Schaltungsplatine geringer als ein zweiter Schwellenwert ist oder die Temperatur der zweiten Schaltungsplatine geringer als ein vierter Schwellenwert ist.

7. Das Verfahren gemäß einem der Ansprüche 1 bis 6, wobei die erste Schaltungsplatine eine Hauptplatine in dem Endgerät ist und die zweite Schaltungsplatine eine Mikroplatine in dem Endgerät ist.

8. Eine Vorrichtung zur Temperatursteuerung, die folgende Merkmale aufweist:
ein Erhaltungsmodul (401, 402), das dazu konfiguriert ist, erste Temperaturinformationen einer ersten Schaltungsplatine in einem Endgerät zu erhalten, wobei die erste Schaltungsplatine mit einer zentralen Verarbeitungseinheit, CPU, versehen ist,
**dadurch gekennzeichnet, dass**
das Erhaltungsmodul (401, 402) ferner dazu konfiguriert ist, zweite Temperaturinformationen einer zweiten Schaltungsplatine in dem Endgerät zu erhalten, wobei die zweite Schaltungsplatine mit einem Ladechip versehen ist; und
die Vorrichtung ferner ein Temperatursteuermodul (403) aufweist, das dazu konfiguriert ist, eine Betriebsfrequenz der CPU gemäß den ersten Temperaturinformationen unabhängig zu steuern, um zu ermöglichen, dass eine Temperatur der CPU innerhalb eines ersten Temperaturbereichs liegt, und einen Ladestrom des Ladechips gemäß den zweiten Temperaturinformationen unabhängig zu steuern, um zu ermöglichen, dass eine Temperatur des Ladechips innerhalb eines zweiten Temperaturbereichs liegt.

9. Die Vorrichtung gemäß Anspruch 8, wobei das Erhaltungsmodul (401, 402) konfiguriert ist zum:
Erfassen von Temperaturen einer oder mehrerer Erfassungspositionen der ersten Schaltungsplatine und der zweiten Schaltungsplatine;
Erhalten der ersten Temperaturinformationen der ersten Schaltungsplatine und der zweiten Temperaturinformationen der zweiten Schaltungsplatine durch Anpassen gemäß den Temperaturen der einen oder mehreren Erfassungspositionen.

10. Die Vorrichtung gemäß Anspruch 9, wobei das Erhaltungsmodul (401, 402) konfiguriert ist zum:
Erfassen der Temperaturen der einen oder mehreren Erfassungspositionen der ersten Schaltungsplatine und der zweiten Schaltungsplatine durch einen beziehungsweise mehrere Temperatursensoren;
Erhalten von Gewichtungskoeffizienten der Temperaturen, die durch den einen beziehungsweise die mehreren Temperatursensoren gemäß einem Abstand zwischen dem Temperatursensor und jeder Schaltungsplatine erfasst werden; und
Erhalten der ersten Temperaturinformationen der ersten Schaltungsplatine und der zweiten Temperaturinformationen der zweiten Schaltungsplatine gemäß den Temperaturen, die durch den einen oder die mehreren Temperatursensoren erfasst werden, und der entsprechenden Gewichtungskoeffizienten.

11. Die Vorrichtung gemäß einem der Ansprüche 8 bis 10, wobei das Temperatursteuermodul (403) dazu konfiguriert ist, zumindest einen der folgenden Schritte durchzuführen:
Verringern der Betriebsfrequenz der CPU ansprechend darauf, dass eine Temperaturanstiegsrate der ersten Schaltungsplatine größer als eine erste Rate ist;
Verringern der Betriebsfrequenz der CPU ansprechend darauf, dass eine Temperatur der ersten Schaltungsplatine größer als ein erster Schwellenwert ist; oder
Erhöhen der Betriebsfrequenz der CPU ansprechend darauf, dass die Temperatur der ersten Schaltungsplatine geringer als ein zweiter Schwellenwert ist.

12. Die Vorrichtung gemäß einem der Ansprüche 8 bis 11, wobei das Temperatursteuermodul (403) dazu konfiguriert ist, zumindest einen der folgenden Schritte durchzuführen:
Verringern des Ladestroms des Ladechips ansprechend darauf, dass eine Temperaturanstiegsrate der zweiten Schaltungsplatine größer als eine zweite voreingestellte Rate ist;
Verringern des Ladestroms des Ladechips ansprechend darauf, dass eine Temperatur der zweiten Schaltungsplatine größer als ein dritter Schwellenwert ist; oder
Erhöhen des Ladestroms des Ladechips ansprechend darauf, dass die Temperatur der zweiten Schaltungsplatine geringer als ein vierter Schwellenwert ist.

13. Die Vorrichtung gemäß Anspruch 9, die ferner ein Frequenzsteuermodul aufweist, das konfiguriert ist zum:
Erhöhen einer Frequenz des Erfassens der Temperaturen der einen oder mehreren Erfassungspositionen in dem Endgerät ansprechend darauf, dass eine Temperatur der ersten Schaltungsplatine größer als ein erster Schwellenwert ist oder eine Temperatur der zweiten Schaltungsplatine größer als ein dritter Schwellenwert ist; oder
Verringern der Frequenz des Erfassens der Temperaturen der einen oder mehreren Erfassungspositionen in dem Endgerät ansprechend darauf, dass die Temperatur der ersten Schaltungsplatine geringer als ein zweiter Schwellenwert ist oder die Temperatur der zweiten Schaltungsplatine geringer als ein vierter Schwellenwert ist.

14. Die Vorrichtung gemäß einem der Ansprüche 8 bis 13, wobei die erste Schaltungsplatine eine Hauptplatine in dem Endgerät ist und die zweite Schaltungsplatine eine Mikroplatine in dem Endgerät ist.

15. Ein computerlesbares Speichermedium mit einem darauf gespeicherten Computerprogramm, wobei, wenn das Programm durch einen Prozessor ausgeführt wird, das Verfahren gemäß einem der Ansprüche 1 bis 7 implementiert wird.

## Revendications

1. Procédé de régulation de température, comprenant :
l'obtention (S101) d'une première information de température d'une première carte de circuit imprimé dans un dispositif terminal, dans lequel la première carte de circuit imprimé dispose d'une unité centrale de traitement, CPU ;
**caractérisé en ce qu'**il comprend en outre :
l'obtention (S102)d'une deuxième information de température d'une deuxième carte de circuit imprimé dans le dispositif terminal, dans lequel la deuxième carte de circuit imprimé dispose d'une puce de charge ; et
la régulation de manière indépendante (S103) d'une fréquence de fonctionnement de la CPU selon la première information de température pour permettre le maintien d'une température de la CPU dans une première plage de température, et la régulation de manière indépendante d'un courant de charge de la puce de charge selon la deuxième information de température pour permettre le maintien d'une température de la puce de charge dans une deuxième plage de température.

2. Procédé selon la revendication 1, dans lequel l'obtention (S101) de la première information de température de la première carte de circuit imprimé dans le dispositif terminal et l'obtention (S102) de la deuxième information de température de la deuxième carte de circuit imprimé dans le dispositif terminal comprend :
l'acquisition de températures d'une ou de plusieurs positions d'acquisition de la première carte de circuit imprimé et de la deuxième carte de circuit imprimé ; et
l'obtention de la première information de température de la première carte de circuit imprimé et de la deuxième information de température de la deuxième carte de circuit imprimé par ajustement selon les températures au niveau de la ou des positions d'acquisition.

3. Procédé selon la revendication 2, dans lequel l'acquisition des températures de la ou des positions d'acquisition de la première carte de circuit imprimé et de la deuxième carte de circuit imprimé comprend :
l'acquisition (S201) des températures de la ou des positions d'acquisition de la première carte de circuit imprimé et de la deuxième carte de circuit imprimé par un ou plusieurs capteurs de température respectivement ;
dans lequel l'obtention de la première information de température de la première carte de circuit imprimé et de la deuxième information de température de la deuxième carte de circuit imprimé par ajustement selon les températures au niveau de la ou des positions d'acquisition comprend :
l'obtention (S202) de coefficients de pondération des températures acquises par le ou les capteurs de température respectivement, selon une distance entre le capteur de température et chaque carte de circuit imprimé ; et
l'obtention (S203) de la première information de température de la première carte de circuit imprimé et de la deuxième information de température de la deuxième carte de circuit imprimé selon les températures acquises par le ou les capteurs de température et les coefficients de pondération correspondants.

4. Procédé selon l'une des revendications 1 à 3, dans lequel la régulation (S103) de la fréquence de fonctionnement de la CPU selon la première information de température pour permettre le maintien de la température de la CPU dans la première plage de température comprend au moins l'une des opérations suivantes :
la réduction de la fréquence de fonctionnement de la CPU en réponse à un taux d'augmentation de température de la première carte de circuit imprimé étant supérieur à un premier taux ;
la réduction de la fréquence de fonctionnement de la CPU en réponse à une température de la première carte de circuit imprimé étant supérieure à une première valeur ; ou
l'augmentation de la fréquence de fonctionnement de la CPU en réponse à la température de la première carte de circuit imprimé étant inférieure à une deuxième valeur seuil.

5. Procédé selon l'une des revendications 1 à 4, dans lequel la régulation (S103) du courant de charge de la puce de charge selon la deuxième information de température pour permettre le maintien de la température de la puce de charge dans la deuxième plage de température comprend au moins l'une des opérations suivantes :
la réduction du courant de charge de la puce de charge en réponse à un taux d'augmentation de température de la deuxième carte de circuit imprimé étant supérieur à un deuxième taux prédéfini ;
la réduction du courant de charge de la puce de charge en réponse à une température de la deuxième carte de circuit imprimé étant supérieure à une troisième valeur seuil ; ou
l'augmentation du courant de charge de la puce de charge en réponse à la température de la deuxième carte de circuit imprimé étant inférieure à une quatrième valeur seuil.

6. Procédé selon la revendication 2, comprenant en outre au moins l'une des opérations suivantes :
l'augmentation d'une fréquence d'acquisition des températures du ou des points d'acquisition dans le dispositif terminal en réponse à une température de la première carte de circuit imprimé étant supérieure à une première valeur seuil ou à une température de la deuxième carte de circuit imprimé étant supérieure à une troisième valeur seuil ; ou
la réduction de la fréquence d'acquisition des températures du ou des points d'acquisition dans le dispositif terminal en réponse à la température de la première carte de circuit imprimé étant inférieure à une deuxième valeur seuil ou à la température de la deuxième carte de circuit imprimé étant inférieure à une quatrième valeur seuil.

7. Procédé selon l'une des revendications 1 à 6, dans lequel la première carte de circuit imprimé est une carte mère dans le dispositif terminal, et la deuxième carte de circuit imprimé est une microcarte dans le dispositif terminal.

8. Appareil de régulation de température, comprenant :
un module d'obtention (401, 402), configuré pour obtenir une première information de température d'une première carte de circuit imprimé dans un dispositif terminal, dans lequel la première carte de circuit imprimé dispose d'une unité centrale de traitement, CPU,
**caractérisé en ce que**,
le module d'obtention (401, 402) est en outre configuré pour obtenir une deuxième information de température d'une deuxième carte de circuit imprimé dans le dispositif terminal, dans lequel la deuxième carte de circuit imprimé dispose d'une puce de charge ; et
l'appareil comprend en outre un module de régulation de température (403), configuré pour réguler de manière indépendante une fréquence de fonctionnement de la CPU selon la première information de température pour permettre le maintien d'une température de la CPU dans une première plage de température, et la régulation de manière indépendante d'un courant de charge de la puce de charge selon la deuxième information de température pour permettre le maintien de la température de la puce de charge dans une deuxième plage de température.

9. Appareil selon la revendication 8, dans lequel le module d'obtention (401, 402) est configuré pour :
acquérir des températures d'une ou de plusieurs positions d'acquisition de la première carte de circuit imprimé et de la deuxième carte de circuit imprimé ;
obtenir la première information de température de la première carte de circuit imprimé et la deuxième information de température de la deuxième carte de circuit imprimé par ajustement selon les températures au niveau de la ou des positions d'acquisition.

10. Appareil selon la revendication 9, dans lequel le module d'obtention (401, 402) est configuré pour :
acquérir les températures de la ou des positions d'acquisition de la première carte de circuit imprimé et de la deuxième carte de circuit imprimé par un ou plusieurs capteurs de température respectivement ;
obtenir des coefficients de pondération des températures acquises par le ou les capteurs de température respectivement, selon une distance entre le capteur de température et chaque carte de circuit imprimé ; et
obtenir la première information de température de la première carte de circuit imprimé et la deuxième information de température de la deuxième carte de circuit imprimé selon les températures acquises par le ou les capteurs de température et les coefficients de pondération correspondants.

11. Appareil selon l'une des revendications 8 à 10, dans lequel le module de régulation de température (403) est configuré pour effectuer au moins l'une des opérations suivantes :
la réduction de la fréquence de fonctionnement de la CPU en réponse à un taux d'augmentation de température de la première carte de circuit imprimé étant supérieur à un premier taux ;
la réduction de la fréquence de fonctionnement de la CPU en réponse à une température de la première carte de circuit imprimé étant supérieure à une première valeur ; ou
l'augmentation de la fréquence de fonctionnement de la CPU en réponse à la température de la première carte de circuit imprimé étant inférieure à une deuxième valeur seuil.

12. Appareil selon l'une des revendications 8 à 11, dans lequel le module de régulation de température (403) est configuré pour effectuer au moins l'une des opérations suivantes :
la réduction du courant de charge de la puce de charge en réponse à un taux d'augmentation de température de la deuxième carte de circuit imprimé étant supérieur à un deuxième taux prédéfini ;
la réduction du courant de charge de la puce de charge en réponse à une température de la deuxième carte de circuit imprimé étant supérieure à une troisième valeur seuil ; ou
l'augmentation du courant de charge de la puce de charge en réponse à la température de la deuxième carte de circuit imprimé étant inférieure à une quatrième valeur seuil.

13. Appareil selon la revendication 9, comprenant en outre un module de régulation de fréquence, configuré pour :
augmenter la fréquence d'acquisition des températures du ou des points d'acquisition dans le dispositif terminal en réponse à une température de la première carte de circuit imprimé étant supérieure à une première valeur seuil ou à une température de la deuxième carte de circuit imprimé étant supérieure à une troisième valeur seuil ; ou
réduire la fréquence d'acquisition des températures du ou des points d'acquisition dans le dispositif terminal en réponse à la température de la première carte de circuit imprimé étant inférieure à une deuxième valeur seuil ou à la température de la deuxième carte de circuit imprimé étant inférieure à une quatrième valeur seuil.

14. Appareil selon l'une des revendications 8 à 13, dans lequel la première carte de circuit imprimé est une carte mère dans le dispositif terminal, et la deuxième carte de circuit imprimé est une microcarte dans le dispositif terminal.

15. Support de stockage lisible par ordinateur sur lequel est enregistré un programme informatique, dans lequel, lorsque le programme est exécuté par un processeur, le procédé selon l'une des revendications 1 à 7 est mis en œuvre.
